# EUROPEAN PATENT SPECIFICATION

(11) **EP 2 236 998 B1**
(45) Date of publication and mention of the grant of the patent: **14.03.2012**
(21) Application number: 09157170.3
(22) Date of filing: 02.04.2009
(51) Int. Cl.: G01F 15/06, G01F 1/66, G01D 4/02

(54) **Consumption meter with rotatable display**
Verbrauchsmesser mit drehbarer Anzeige
Compteur de consommation doté d'un affichage rotatif

(43) Date of publication of application: 06.10.2010
(73) Proprietor: KAMSTRUP A/S, 8660 Skanderborg (DK)
(72) Inventor: Laursen, Peter Schmidt, 8660, Skanderborg (DK); Drachmann, Jens, 8260, Viby J (DK)
(74) Representative: Plougmann & Vingtoft A/S

(56) References cited:
- DE-A1- 2 326 427
- DE-A1- 3 727 912
- DE-A1- 19 523 593
- DE-A1- 19 525 685

## Description

### FIELD OF THE INVENTION

The invention relates to the field of consumption meters, especially the field of consumption meters comprising an ultrasound flow meter. More specifically, the invention provides a consumption meter with a display that can be rotated to allow readability in various mounting orientations.

### BACKGROUND OF THE INVENTION

Remote reading of ultrasound type consumption meters using wireless radio frequency reading is often possible with modern consumption meters. However, it is still desirable that the user can read the consumed amount on a display of the meter in order to be able to regularly monitor the consumption of the physical entity in question. This is typically made possible with heat meters, where a cable connects an ultrasound flow meter unit and a calculator unit with a display. Thus, the cable connection enables the flow meter unit to be mounted in relation to the piping as required, while the calculator unit can be positioned e.g. mounted on a wall, so as to allow easy reading of the display.

Consumption meters based on the ultrasound principle, e.g. used for measuring the volume of fresh water consumption in a household, are typically rather compact. Often, all mechanical and electronic equipment as well as a user readable display element are provided within one single casing. It can be difficult to mount such meter in the piping installation of all users, such that the display is oriented for easy reading by the user in a comfortable position. Due to the flow direction in the piping installation, the display may in some cases turn upside down, when the meter is correctly mounted. To overcome this, two versions of the meter can be manufactured, with the only difference being that the display is turned, e.g. 180° in relation to the meter housing compared to the other version, or four versions with the display turned in steps of 90°. However, such solution is complex with respect to both manufacturing, and complicates logistics in connection with installation. Thus, such solution is rather expensive. Examples for such meters can be found in DE 19525685, DE 3727912, DE 19523593 or DE 2326427.

### SUMMARY OF THE INVENTION

Following the above, it may be seen as an object of the present invention to provide a consumption meter based on the ultrasound principle which is suited for easy reading of its display when mounted in different orientations, and still only requiring one version to be manufactured.

The invention provides, a consumption meter arranged to measure an amount of a physical entity, according to claim 1.

Such consumption meter can be manufactured in one version. The meter comprises two units being interconnected by electrical terminals that can engage at different angular positions. Easy reading of the display element is made possible even in embodiments with both of the first and second units contained within one single casing, since the different angular engagement of the terminals enables turning or rotation of the display relative to fixed parts of the meter. During installation, the installing person can select the desired angular position of the second unit in relation to the first unit, and thus select the orientation of the display element. Hereby, it is possible to ensure easy reading of the display in a given piping installation. In compact embodiments where both of the first and second units are arranged within one single casing, the installing person can interconnect the first and second units before closing the casing, e.g. by sealing a top lid covering the display.

Preferably, the first and second sets of terminals are directly connected to the respective first and second circuit boards, e.g. with their electric terminals soldered to conductive paths of the circuit boards. Hereby, the first and second units can be connected without involvement of any wires, which is advantageous with respect to the manufacturing process. However, it is appreciated that, if desired, the first and second set of terminals may be electrically connected to the respective first and second circuit boards via a cable or wire or via another intermediate mechanical and/or electrical connection. Likewise, if desired, a wire with a set of matching terminals can be inserted to interconnect the first and second sets of terminals.

Different configurations of the first and second sets of terminals, e.g. in the form of one or more of known plugs or connectors, can be used to provide a desired number of different angles between the first and second units.

Preferably, the consumption meter comprises an electronic calculator circuit arranged to calculate the amount of the physical entity based on the electric flow rate signal. In one embodiment, the electronic calculator circuit is arranged on the second circuit board, preferably combined with the first and second sets of terminals being arranged for transfer of the electric flow rate signal. In another embodiment, the electronic calculator circuit is arranged on the first circuit board, preferably combined with the first and second sets of terminals being arranged for transfer of data representing the amount of the physical entity which can then be received and displayed by the display element.

In one embodiment, the second unit receives electric power to operate at least the display element via the second set of terminals, e.g. the first unit may comprise a battery electrically connected to the first set of terminals. Preferably, all circuits, including the calculator circuit if present in the second unit, are powered via the second set of terminals.

Preferably one or both of the first and second sets of terminals comprise a plurality of interconnected and spatially distributed electrical terminals. Such electrical terminals can provide the same electrical signal to the corresponding counterpart but at different angular positions, when properly spatially distributed.

The first and second sets of terminals may each comprise at least three electrical terminals. Such three terminals may be: an electrical ground terminal, a supply terminal, and a data terminal (e.g. a flow rate signal terminal or a signal representing the amount of the physical entity). With such three terminals interconnecting the first and second units, it is possible to make the meter function with one single power source, and with a reasonable number of single terminals required to implement a given number of possible engagement angles.

In one embodiment, the first and second sets of terminals are configured for mutual engagement at two different angular positions relative to each other, such as 0° and 180°. In another embodiment, the first and second sets of terminals are configured for mutual engagement at four different angular positions relative to each other, such as 0°, 90°, 180°, and 270°. In such embodiments, the electrical terminals of the first set of terminals may be fixed in relation to the first circuit board, preferably in the form of electrically conducting members soldered to conducting paths of the first circuit boards. In principle, any known type of female and male electrical terminals can be used.

In one embodiment, the electrical terminals of the first and second sets of terminals are concentrically arranged in relation to each other, so as to allow mutual engagement of the first and second sets of terminals at any angular positions relative to each other. Such type of terminal set can provide a freedom of rotation if it is spatially mounted in relation to the first and second circuit boards, such as in their geometric centres, so as to provide a suitable centre of rotation. A set of female and male connectors of the coaxial type soldered directly onto the respective first and second boards can be used.

To inhibit tampering of the meter, a seal, such as a wire seal, enables detection of disengagement of the first and second sets of terminals, during normal operation. In a preferred embodiment, the first and second units are arranged within a casing with an opening protected by a lid, and wherein the seal enables detection of opening of the lid. The casing may especially be monolithically integrated with the housing, such as providing one single unit. Hereby, both of the first and second units and their interconnection are positioned within one common seal enabling detection of any disengagement of the first and second sets of terminals, and thus enabling detection of any attempt to interrupt the meter function by such disengagement.

The housing may be formed by a polymeric material, or the housing may be formed by metal. In polymeric houses, ultrasound waves can penetrate through the housing wall with low attenuation and thus the need for a hole through the pressure carrying housing wall can be avoided.

In preferred embodiments, the meter comprises first and second ultrasound transducers arranged in relation to the housing. Especially, the first and second transducers and the first unit may form a mechanically separate unit wherein at least one fixing member is attached to the first circuit board so as to limit relative movement between the first circuit board and the first and second ultrasound transducers, such as the at least one fixing member being in the form of electrically conducting clips or solder. Hereby, a compact measurement unit can be provided which can be tested before final assembly with the second unit and the housing.

In one embodiment, one common protection membrane, such as a sheet of metal, is arranged to protect both of the first and second ultrasound transducers from contact with the fluid. Especially, such common protection membrane can be part of a water-tight casing in which the first and second ultrasound transducers and the first circuit board are positioned. Hereby protection of the electronic circuits on the first circuit board can be protected against humidity and thus provide a prolonged life of such circuits which is especially important in case of cooling meter.

The consumption meter may be a heating meter, a cooling meter, a water meter, or a gas meter.

### BRIEF DESCRIPTION OF THE DRAWINGS

Embodiments of the invention will be described, by way of example only, with reference to the drawings, in which
Fig. 1 illustrates one embodiment with a centrally placed cross-shaped set of terminals for interconnecting a circuit board with measurement circuits with a circuit board with a display element,
Fig. 2 illustrates another embodiment where the two circuit boards are interconnected by a coaxial connector,
Fig. 3 illustrates an exploded view of a water meter according to the invention, based on the connection principle shown in Fig. 1,
Fig. 4 illustrates a cut of the key components of the water meter embodiment also shown in Fig. 3, and
Fig. 5 illustrates an outer view of the water meter embodiment of Figs. 3 and 4.

### DETAILED DESCRIPTION OF THE INVENTION

In the following, all illustrated embodiments of the invention are suited as parts of a specific type of water meter with a circular shaped housing. However, it is appreciated that the principles apply in general for any shape of circuit boards and for any consumption meter.

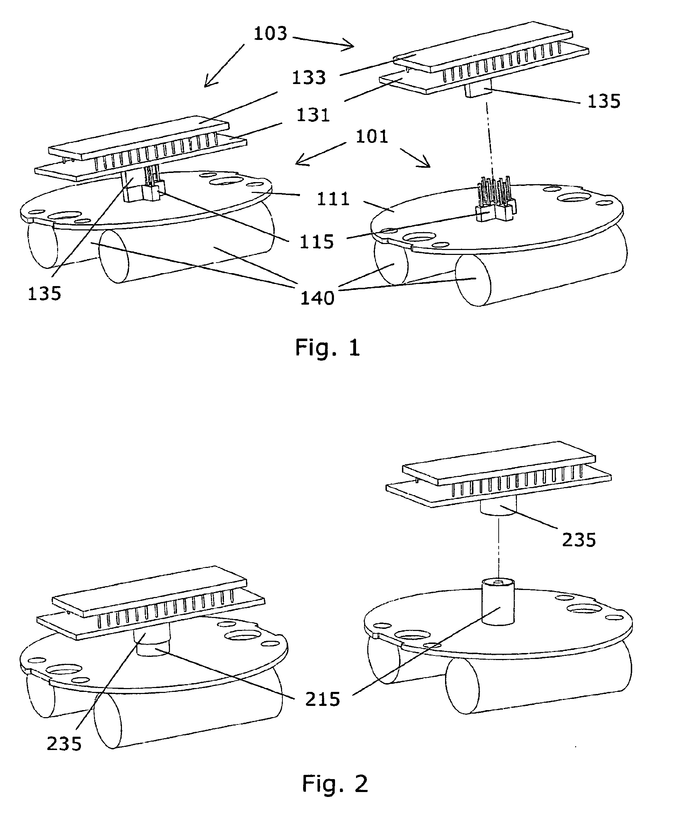

. In Fig. 1 first and second units 101, 103 are illustrated with their terminals 115, 135 mutually engaged (to the left) and disengaged (to the right). The first unit 101 includes a first circuit board 111 with a measurement circuit (not visible) arranged to operate a set of ultrasound transducers (not visible). The second unit 103 includes a second circuit board 131 with a calculator circuit (not visible) and a display element 133, e.g. an LCD element, soldered to the second circuit board 131.

The first circuit board 111 has on its upper surface a first set of terminals 115 with 9 electrically conducting pins soldered to conducting paths of the first circuit board 111 and thereby in connection with the measurement circuit. The first set of terminals 115 is spatially configured with the electrical terminals positioned such that one pin is in a central part of the circuit board, while the remaining 8 pins are positioned around the central pin on two lines perpendicular to each other and intersecting each other at the position of the central pin. The principle is that a plurality of electrical terminals, here pins, are interconnected and thus provide the same electrical signal, but this plurality of electrical terminals are spatially distributed to allow different angular engagement.

With the illustrated spatial configuration of the pins, three electrical outputs from the first unit 101 can be transferred to the second unit 103 at four different angular positions relative to each other, 90 spaced apart. This is achieved by a second set of terminals 135 soldered to conducting paths of the second circuit board 131, the second set of terminals 135 including three electrical terminals arranged for engagement with three of the 9 pins of the first set of terminals 115.

Since a fluid installation is most often done with horizontal or vertical pipes, the 90° step of rotation possible in the embodiment of Fig. 1 is considered adequate for providing comfortable reading of the display element 133 in most cases. But obviously other angles of rotation could be considered by other configuration of the first and second set of terminals 115, 135. For example, the same type of second set of terminals 135 with three can be combined with alternative pin configurations of the first set of terminals 115, e.g. using only 7 pins to obtain an angular resolution of 120°, still with three electrical connections transferred between the first and second units 101, 103. Alternatively, more pins could be used to provide three connections: 11 pins can provide an angular resolution of 72°, 13 pins can provide an angular resolution of 60°, or 15 pins can provide an angular resolution of 51°.

The three electrical signals transferred by the sets of terminals 115, 135 are preferably: 1) electrical ground (e.g. the central pin), 2) supply voltage, and 3) flow rate signal (such as in the form of a train of pulses each representing an amount of fluid volume). The second set of terminals is soldered to the second circuit board 131 at the side opposite the display element 133.

Depending on the number of functionalities built into the consumption meter, at least 3 terminals are required to connect the first and second units 101, 103, as described above. However, in cooling meters or heat meters, temperature sensors are involved and thus need in some cases to be connected via the first and second set of terminals 115, 135. To do so, the required number of electrical terminals in the first and second set of terminals 115, 135 will accordingly be higher.

The embodiment of Fig. 1 allows determination of the angular position of the first and second units relative to each other at the installing time. This allows rotation of the display element 133 relative to the housing of the consumption meter. Normally the first unit 101 will be fixed to the housing of the consumption meter, and thus the display element will also have a locked position in relation to the housing if fixed to the first unit 101. However, with the illustrated embodiment, a technician installing a consumption meter can decide the orientation of the display element 133 and thus obtain a consumption meter which can be manually read at a comfortable position in any piping installation, and to obtain this, only one single version of the consumption meter is required . Preferably, the installing person will, after selecting the angle of engagement between the first and second units 101, 103, finalize the installation by providing a seal to allow detection of any disengagement of the first and second set of terminals 115, 135, since the embodiment of Fig. 1 will stop to function if the electrical connection between the first and second units 101, 103 is interrupted by disengagement of the first and second set of terminals 115, 135. Such seal may be a wire type seal, using a wire and a seal of lead or plastic or the like. The seal can be provided through the first and second circuit boards 111, 131 such that detection of disengagement is possible. However, the seal may also be in the form of a seal serving to detect opening of a casing in which the first and second units 115, 135 are positioned, as will be illustrated by an example later. Alternatively, opening of an outer casing may be detected by sealing the casing in the form of lacquering one or more screws used to fasten a lid to the casing.

In the illustrated embodiment of Fig. 1, two batteries 140 are attached to and electrically connected to the first circuit board 111 to supply electrical power to the measurement circuit. Further, the two batteries 140 are electrically connected to the first set of terminals 115 in order to supply electrical power to the second unit 103 via the second set of terminals 135.

Fig. 2 illustrates the same first and second circuit boards 111, 131 as in Fig. 1, however with an alternative electrical interconnection in the form of a set of coaxial connection plugs 215, 235. A circular shaped central pin and a number of ring shaped connections placed coaxial to this are used to provide two or more electrical terminals. By the coaxial shaped conductors, the connection can be turned freely, thus offering freedom for placement and angular direction of the display relative to the consumption meter housing. The central connector of the terminals 215, 235 may transfer electrical ground, while one coaxial conductor of the terminals 215, 235 transfers an electrical supply voltage, while a second coaxial conductor of the terminals 215, 135 transfers a flow rate signal.

In both of the described embodiments in Figs. 1 and 2, the plug counterpart that is incorporated in the calculator housing preferably creates a connection pressure to each of the pins or ring shaped connections by being distorted e.g. by using tulip type connectors. This is well known within the art to provide reliable electrical connections.

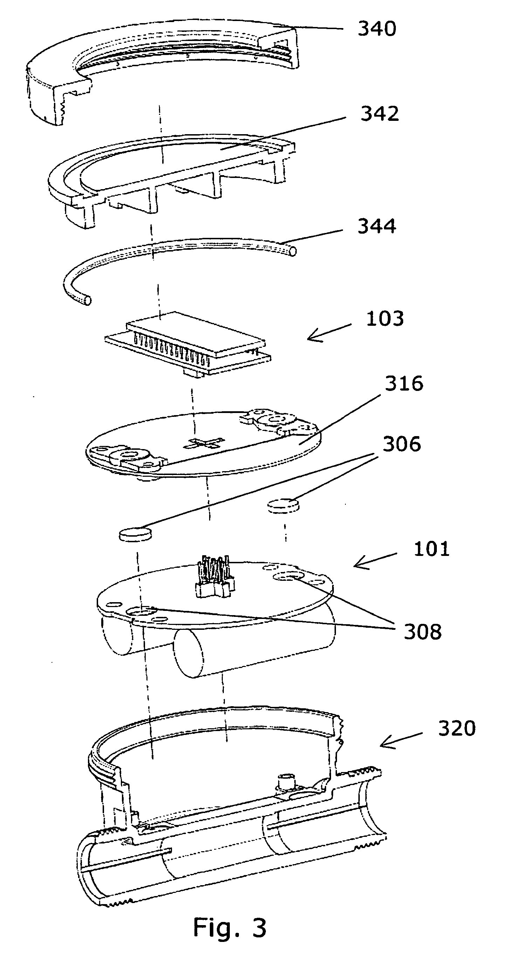

Fig. 3 illustrates an exploded view of a water meter in which the first and second units 101, 103 from Fig. 1 is included. A housing 320 is formed by a single moulded polymeric element with a through-going opening arranged for receiving a measuring tube element and a set of ultrasound reflectors. Threaded end parts on the housing 320 serve for connection to a water piping installation. The housing 320 further provides a casing for housing the first and second units 101, 103 as well as two ultrasound transducers 306 arranged in matching openings 308 in the first circuit board of the first unit 101.

The ultrasound transducers 308 are preferably (not shown) mechanically and electrically connected to the first circuit board, and thereby to the measurement circuit, by means of fixing members, such as metal clips or solder, e.g. by means of soldering the transducers 308 to the first circuit board by means of Surface Mounting Technology. Thus, together with the ultrasound transducers 308, the first unit forms a separate unit which can be tested before final assembly of the consumption meter. As in Fig. 1, the first unit 101 includes batteries attached to a bottom side of the first circuit board, while the first set of terminals is attached an upper side of the first circuit board. The batteries are attached so as to fit, when assembled, within the casing part of the housing 320, on the sides of the through-going opening enclosing the measuring tube.

A bracing element 316 is arranged for mounting on top of the first unit 101, with surfaces serving to press the transducers 308 against surfaces of the housing 320, when assembled. Through-going holes through the bracing element 316 and through the first unit 101 are suited for fastening these elements by means of screws (not shown) to corresponding threads formed in the housing 320, thus serving to seal the first unit, e.g. using lacquer to seal the screws, after mounting with the purpose of revealing any intrusion in the vital meter circuits, once it has been sealed from the manufacturer. Further, the bracing element 316 has a through-going hole allowing passage of the first set of terminals. The bracing element 316 can be formed by a printed circuit board, by a polymeric plate, e.g. formed in a pressure die casting process, or by a sheet of metal.

The second unit 103 has its display element on an upper side of the second circuit board, while the second set of terminals is arranged on a lower side of the second circuit board. A threaded top port 340 is arranged to press a top lid 342 with a transparent part in front of the display element together with the housing 320 which on its outer periphery has a corresponding thread. A flexible O-ring 344 serves to provide a water-tight enclosure between the top lid 342 and the housing 320, thereby providing a water-tight casing for the ultrasound transducers 306 and all electronic components of the first and second units 101, 103. The circuit boards of the first and second units 101, 103 have a general circular shape so as to fit the general circular shape of the housing. The second unit may further include additional circuits, e.g. a radio communication unit for remote reading of the meter.

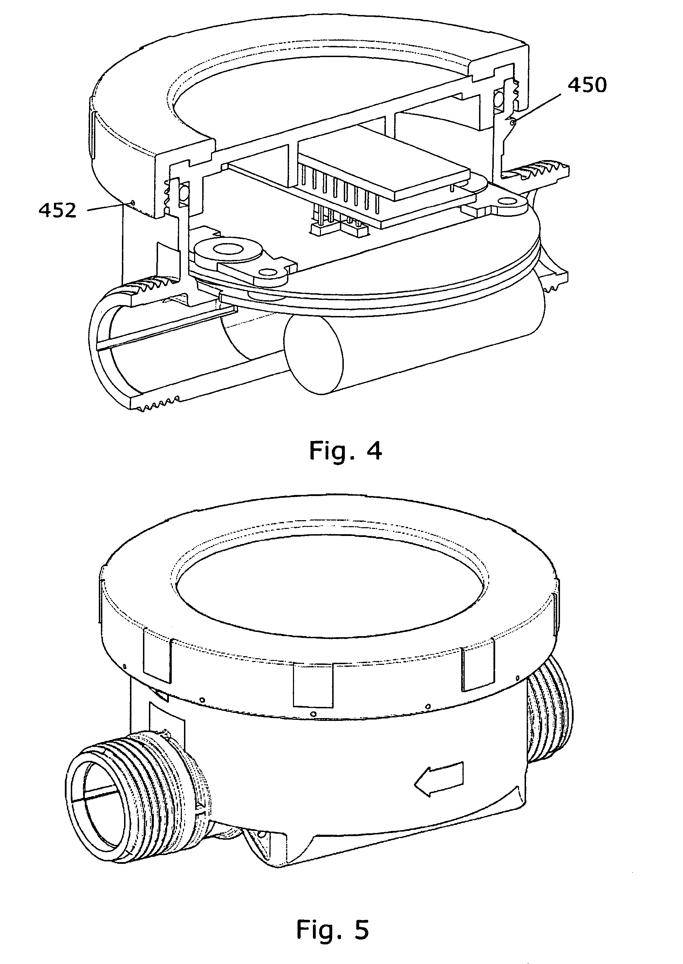

Fig. 4 illustrates a cut view of the water meter of Fig. 3 but in an assembled state with all of the first and second units within the casing part of the housing, and with this casing part being closed by the top lid kept in place by the threaded top part. The second unit is positioned on top of the first unit with their respective second and first sets of terminals in engagement. A seal (not shown) can be provided by means of a wire seal with the wire going through a hole in the threaded top part 452 and around the piping or through a hole 450 provided in a peripheral part of the housing, hereby allowing detection of any attempt to open the casing part of the housing.

Fig. 5 illustrates the appearance of the assembled water meter of Fig. 4.

To sum up, the invention provides a consumption meter, e.g. a heat, cooling, gas or water meter, with a housing with the measuring tube inside, and an ultrasound transducer arranged for measurement of fluid flow in the measuring tube. The meter includes a first unit 101 with a first circuit board 111 with an electronic measurement circuit arranged to operate the ultrasound transducer, and a first set of terminals 115 electrically connected to the first circuit board 111. The meter further includes a second unit 103 with a second circuit board 131, a display element 133 arranged to display a measured amount, preferably also a calculator circuit, and a second set of terminal 135 connected to the second circuit board 131. The second set of terminals 135 is arranged for engagement with the first set of terminals 115 at least at two different angular positions relative to each other, such as at four different angular positions in 90° steps. Hereby, the display 133 can be turned for comfortable reading in relation to the measurement circuit, and thus in relation to the housing, irrespective of an actual orientation of the housing in a specific piping installation. A coaxial type connector can be used to interconnect the first and second circuit boards, thus allowing free relative rotation of the display at any angle. A simple type of connector 115 based on conductive pins geometrically arranged to fit the desired angular resolution can also be used. Preferably, three connections are provided by the first and second set of terminals: electric ground, electric supply, and flow rate signal.

In the claims, the terms "comprising" or "including" do not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. A consumption meter arranged to measure an amount of a physical entity, the meter comprising:
- a housing (320) with a measuring tube arranged inside,
- an ultrasound transducer (306) arranged in relation to the housing (320) so as to allow ultrasound measurements on fluid flowing in the measuring tube, and
- a first unit (101) comprising
- a first circuit board (111) with an electronic measurement circuit arranged to operate the ultrasound transducer (306) and to generate an electric flow rate signal in accordance with a measured flow rate, and
- a second unit (103) comprising
- a second circuit board (131),
- a display element (133) arranged to display of a value representing the amount of the physical entity, and
**characterized in that**
the first unit (101) further comprises a first set of terminals (115) comprising at least two electrical terminals electrically connected to the first circuit board (111), and the second unit (103) further comprises a second set of terminals (135) comprising at least two electrical terminals electrically connected to the second circuit board (131), and arranged for engagement with the first set terminals (115), wherein the first and second sets of terminals (115, 135) are configured for mutual engagement at least at two different angular positions relative to each other.

2. Consumption meter according to claim 1, comprising an electronic calculator circuit arranged to calculate the amount of the physical entity based on the electric flow rate signal, wherein the electronic calculator circuit is arranged on the second circuit board (131).

3. Consumption meter according to claim 1, comprising an electronic calculator circuit arranged to calculate the amount of the physical entity based on the electric flow rate signal, wherein the electronic calculator circuit is arranged on the first circuit board (111).

4. Consumption meter according to any of the preceding claims, wherein the second unit (103) receives electric power to operate at least the display element (133) via the second set of terminals (135).

5. Consumption meter according to any of the preceding claims, wherein the first and second sets of terminals (115, 135) each comprises at least three electrical terminals.

6. Consumption meter according to any of the preceding claims, wherein the consumption meter further comprises a casing, and wherein at least the first unit is arranged within the casing.

7. Consumption meter according to claim 6, wherein the casing is monolithically integrated with the housing.

8. Consumption meter according to any of the preceding claims, wherein the electrical terminals of the first set of terminals (115) are fixed in relation to the first circuit board (111).

9. Consumption meter according to any of the preceding claims, wherein the electrical terminals of the first and second sets of terminals (115, 135) are concentrically arranged in relation to each other, so as to allow mutual engagement of the first and second sets of terminals (115, 135) at any angular positions relative to each other.

10. Consumption meter according to any of the preceding claims, wherein a seal enables detection of disengagement of the first and second sets of terminals (115, 135), during normal operation.

11. Consumption meter according to any of the preceding claims, wherein the housing (320) is formed by a polymeric material.

12. Consumption meter according to any of the preceding claims, comprising first and second ultrasound transducers (306) arranged in relation to the housing (320).

13. Consumption meter according to claim 12, wherein the first and second transducers (306) and the first unit (101) form a mechanically separate unit wherein at least one fixing member is attached to the first circuit board (111) so as to limit relative movement between the first circuit board (111) and the first and second ultrasound transducers (306).

14. Consumption meter according to claim 12 or 13, wherein one common protection membrane is arranged to protect both of the first and second ultrasound transducers (306) from contact with the fluid.

15. Consumption meter according to any of claims 1-14, being one of: a heating meter, a cooling meter, a water meter, or a gas meter.

## Patentansprüche

1. Verbrauchsmesser, angeordnet zum Messen eine Menge einer physikalischen Größe, wobei der Messer umfasst:
- ein Gehäuse (320) mit einem im Inneren angeordneten Messrohr,
- einen Ultraschallwandler (306), der derart in Bezug auf das Gehäuse (320) angeordnet ist, dass Ultraschallmessungen eines durch das Messrohr strömenden Fluids möglich sind, und
- eine erste Einheit (101), umfassend
- eine erste Leiterplatte (111) mit einem elektronischen Messschaltkreis, der zum Betrieb des Ultraschallwandlers (306) und zum Erzeugen eines elektrischen Signals für die Strömungsgeschwindigkeit in Übereinstimmung mit einer gemessenen Strömungsgeschwindigkeit angeordnet ist, und
- eine zweite Einheit (103), umfassend
- eine zweite Leiterplatte (131),
- ein Anzeigeelement (133), das zum Anzeigen eines Werts angeordnet ist, der die Menge der physikalischen Größe darstellt, und
**dadurch gekennzeichnet, dass**
die erste Einheit (101) weiterhin einen ersten Satz Anschlüsse (115) umfasst, die mindestens zwei elektrische Anschlüsse umfassen, welche elektrisch mit der ersten Leiterplatte (111) verbunden sind, und die zweite Einheit (103) mindestens einen zweiten Satz Anschlüsse (135) umfasst, die mindestens zwei elektrische Anschlüsse umfassen, welche elektrisch mit der zweiten Leiterplatte (131) verbunden und zum Eingriff mit dem ersten Satz Anschlüsse (115) angeordnet sind, wobei der erste und der zweite Satz Anschlüsse (115, 135) für den gegenseitigen Eingriff in mindestens zwei verschiedenen Winkelpositionen in Bezug zueinander konfiguriert sind.

2. Verbrauchsmesser nach Anspruch 1, umfassend einen elektronischen Rechenschaltkreis, der zum Berechnen der Menge der physikalischen Größe auf der Grundlage des elektrischen Signals für die Strömungsgeschwindigkeit angeordnet ist, wobei der elektronische Rechenschaltkreis auf der zweiten Leiterplatte (131) angeordnet ist.

3. Verbrauchsmesser nach Anspruch 1, umfassend einen elektronischen Rechenschaltkreis, der zum Berechnen der Menge der physikalischen Größe auf der Grundlage des elektrischen Signals für die Strömungsgeschwindigkeit angeordnet ist, wobei der elektronische Rechenschaltkreis auf der ersten Leiterplatte (111) angeordnet ist.

4. Verbrauchsmesser nach einem der vorhergehenden Ansprüche, wobei die zweite Einheit (103) elektrischen Strom zum Betrieb mindestens des Anzeigeelements (133) über den zweiten Satz Anschlüsse (135) erhält.

5. Verbrauchsmesser nach einem der vorhergehenden Ansprüche, wobei der erste und der zweite Satz Anschlüsse (115, 135) jeweils mindestens drei elektrische Anschlüsse umfassen.

6. Verbrauchsmesser nach einem der vorhergehenden Ansprüche, wobei der Verbrauchsmesser weiterhin eine Ummantelung umfasst und wobei mindestens die erste Einheit in der Ummantelung angeordnet ist.

7. Verbrauchsmesser nach Anspruch 6, wobei die Ummantelung monolithisch mit dem Gehäuse integriert ist.

8. Verbrauchsmesser nach einem der vorhergehenden Ansprüche, wobei die elektrischen Anschlüsse des ersten Satzes Anschlüsse (115) in Bezug zur ersten Leiterplatte (111) unbeweglich sind.

9. Verbrauchsmesser nach einem der vorhergehenden Ansprüche, wobei die elektrischen Anschlüsse des ersten und des zweiten Satzes Anschlüsse (115, 135) konzentrisch in Bezug zueinander angeordnet sind, um ein gegenseitiges Eingreifen des ersten und des zweiten Satzes Anschlüsse (115, 135) in einer beliebigen Winkelposition zueinander zu ermöglichen.

10. Verbrauchsmesser nach einem der vorhergehenden Ansprüche, wobei ein Siegel die Erfassung einer Trennung des ersten und des zweiten Satzes Anschlüsse (115, 135) während des normalen Betriebs ermöglicht.

11. Verbrauchsmesser nach einem der vorhergehenden Ansprüche, wobei das Gehäuse (320) aus einem Polymermaterial ausgebildet ist.

12. Verbrauchsmesser nach einem der vorhergehenden Ansprüche, umfassend einen ersten und einen zweiten Ultraschallwandler (306), die in Bezug zum Gehäuse (320) angeordnet sind.

13. Verbrauchsmesser nach Anspruch 12, wobei der erste und der zweite Wandler (306) sowie die erste Einheit (101) eine mechanisch getrennte Einheit bilden, wobei mindestens ein Befestigungselement an der ersten Leiterplatte (111) angebracht ist, um die relative Bewegung zwischen der ersten Leiterplatte (111) und dem ersten und dem zweiten Ultraschallwandler (306) zu beschränken.

14. Verbrauchsmesser nach Anspruch 12 oder 13, wobei eine gemeinsame Schutzmembran zum Schutz sowohl des ersten als auch des zweiten Ultraschallwandlers (306) vor Kontakt mit dem Fluid angeordnet ist.

15. Verbrauchsmesser nach einem in der Ansprüche 1-14, der entweder ein Wärmemesser, ein Kältemesser, ein Wassermesser oder ein Gasmesser ist.

## Revendications

1. Compteur de consommation disposé pour mesurer une quantité d'une entité physique, le compteur comprenant :
- un boîtier (320) dans lequel est disposé un tube de mesure,
- un transducteur à ultrasons (306) disposé par rapport au boîtier (320) de manière à permettre des mesures par ultrasons sur un fluide s'écoulant dans le tube de mesure, et
- une première unité (101) comprenant
- une première carte de circuits imprimés (111) dotée d'un circuit de mesure électronique disposée pour faire fonctionner le transducteur à ultrasons (306) et pour générer un signal électrique de vitesse d'écoulement selon une vitesse d'écoulement mesurée, et
- une deuxième unité (103) comprenant
- une deuxième carte de circuits imprimés (131),
- un élément d'affichage (133) disposé pour afficher une valeur représentant la quantité de l'entité physique, et
**caractérisé en ce que**
la première unité (101) comprend également un premier ensemble de bornes (115) comprenant au moins deux bornes électriques raccordées électriquement à la première carte de circuits imprimés (111), et la deuxième unité (103) comprend également un deuxième ensemble de bornes (135) comprenant au moins deux bornes électriques raccordées électriquement à la deuxième carte de circuits imprimés (131), et disposé pour s'accoupler avec le premier ensemble de bornes (115), dans lequel le premier et le deuxième ensemble de bornes (115, 135) sont configurés pour s'accoupler l'un avec l'autre en au moins deux positions angulaires différentes l'un par rapport à l'autre.

2. Compteur de consommation selon la revendication 1, comprenant un circuit de calcul électronique disposé pour calculer la quantité de l'entité physique sur la base du signal électrique de vitesse d'écoulement, dans lequel le circuit de calcul électronique est disposé sur la deuxième carte de circuits imprimés (131).

3. Compteur de consommation selon la revendication 1, comprenant un circuit de calcul électronique disposé pour calculer la quantité de l'entité physique sur la base du signal électrique de vitesse d'écoulement, dans lequel le circuit de calcul électronique est disposé sur la première carte de circuits imprimés (111).

4. Compteur de consommation selon l'une quelconque des revendications précédentes, dans lequel la deuxième unité (103) reçoit de l'énergie électrique afin de faire fonctionner au moins l'élément d'affichage (133) via le deuxième ensemble de bornes (135).

5. Compteur de consommation selon l'une quelconque des revendications précédentes, dans lequel le premier et le deuxième ensemble de bornes (115, 135) comprennent chacun au moins trois bornes électriques.

6. Compteur de consommation selon l'une quelconque des revendications précédentes, dans lequel le compteur de consommation comprend également un carter, et dans lequel au moins la première unité est disposée à l'intérieur du corps.

7. Compteur de consommation selon la revendication 6, dans lequel le carter est intégré de façon monolithique au boîtier.

8. Compteur de consommation selon l'une quelconque des revendications précédentes, dans lequel les bornes électriques du premier ensemble de bornes (115) sont fixes par rapport à la première carte de circuits imprimés (111).

9. Compteur de consommation selon l'une quelconque des revendications précédentes, dans lequel les bornes électriques du premier et du deuxième ensemble de bornes (115, 135) sont disposées de façon concentrique les unes par rapport aux autres, de manière à permettre un accouplement du premier et du deuxième ensemble de bornes (115, 135) l'un avec l'autre en toute position angulaire l'un par rapport à l'autre.

10. Compteur de consommation selon l'une quelconque des revendications précédentes, dans lequel un plombage permet de détecter le désaccouplement du premier et du deuxième ensemble de bornes (115, 135) pendant le fonctionnement normal.

11. Compteur de consommation selon l'une quelconque des revendications précédentes, dans lequel le boîtier (320) est constitué d'un matériau polymère.

12. Compteur de consommation selon l'une quelconque des revendications précédentes, comprenant un premier et un deuxième transducteur à ultrasons (306) disposés en liaison avec le boîtier (320).

13. Compteur de consommation selon la revendication 12, dans lequel le premier et le deuxième transducteur (306) et la première unité (101) forment une unité mécaniquement séparée dans laquelle au moins un élément de fixation est solidaire de la première carte de circuits imprimés (111) de manière à limiter le mouvement relatif entre la première carte de circuits imprimés (111) et le premier et le deuxième transducteur à ultrasons (306).

14. Compteur de consommation selon la revendication 12 ou 13, dans lequel une membrane de protection commune est disposée pour protéger à la fois le premier et le deuxième transducteur à ultrason (306) du contact avec le fluide.

15. Compteur de consommation selon l'une quelconque des revendications 1 à 14, étant de l'un des types suivants : compteur de chauffage, compteur de refroidissement, compteur d'eau ou compteur de gaz.
